# EUROPEAN PATENT APPLICATION

(11) **EP 4 617 240 A1**
(43) Date of publication of application: **17.09.2025**
(21) Application number: 24189575.4
(22) Date of filing: 18.07.2024
(51) Int. Cl.: C02F 1/28, B01J 20/02, B01J 23/745, C02F 1/72, C02F 101/30, C02F 101/34

(54) **SOLID CATALYST**

(30) Priority: 14.03.2024 IT 202400005755
(71) Applicant: Iride Acque Societa' Benefit S.r.l., 43121 Parma (PR) (IT)
(72) Inventor: CASADEI, Monica, 43121 Parma (PR) (IT); FOLLONI, Matteo, 43121 Parma (PR) (IT); CAPOTI, Francesco, 43121 Parma (PR) (IT); FERRAGLIO, Marzio, 43121 Parma (PR) (IT)
(74) Representative: Cavattoni, Raimondi & Luppi Srl

(57) **Abstract**

A solid catalyst, usable for treating industrial wastewater, comprises a mixture of iron, oxygen, manganese, carbon, nickel, zinc and potassium. The aforesaid catalyst is able to catalyze oxidation processes of polluting agents in the presence of oxidizing agents and, alternatively, to act as an adsorbent of the polluting agents in the absence of the oxidizing agents. A method for depurating industrial wastewater by using the aforesaid solid catalyst comprises: adding the solid catalyst to industrial wastewater to be treated, so as to bring the catalyst into contact with the wastewater; adding optionally an oxidizing agent; in the presence of the oxidizing agent, removing polluting agents contained in the wastewater through oxidation processes that are catalyzed by the solid catalyst, or, in the absence of the oxidizing agent, removing the polluting agents by the adsorption thereof to the solid catalyst.

## Description

The invention relates to a catalyst, in particular a solid catalyst usable for depurating wastewater, in particular industrial wastewater, as well as a method for depurating industrial wastewater using the aforesaid solid catalyst.

"Industrial wastewater" is defined as the wastewater discharged from buildings or plants in which commercial or goods manufacturing activities are performed. The industrial slurries contained in the aforesaid wastewater have a high polluting load and consequently the treatment of the slurries is particularly complicated. Furthermore, the industrial slurries are often discharged at a discontinuous flowrate and are treated in substantially small spaces, which significantly increases the difficulties of treatment. Therefore, pre-treatment plants are provided that are located upstream of the industrial wastewater treatment plants and are used to reduce the polluting load of the wastewater, so as to improve the quality of the latter in terms of biodegradability.

Industrial wastewater is treated by using chemical-physical methods and advanced oxidation processes. The suspended solids are removed by means of the chemical-physical methods - comprising coagulation, flocculation and precipitation - while the advanced oxidation processes enable the suspended and dissolved pollutants to be degraded chemically. The advanced oxidation processes exploit the generation of hydroxyl radicals (·OH), which are provided with a high oxidating power and are thus able to also oxidate polluting agents that are substantially resistant to oxidation, including processes of pushed oxidation. Known advanced oxidation processes, although they are effective in reducing the COD (chemical oxygen demand) of the suspended solids and increasing the biodegradability of the polluting agents, nevertheless have high costs.

In order to reduce the aforesaid costs, catalysts are known and used that enable to reduce the times of the oxidative reactions by which the polluting agents are degraded. In this manner, it is possible to reduce the dimensions and complexity of the apparatuses included in the depuration plants, as well as the corresponding operating costs.

Heterogeneous catalysis methods are preferably used - namely catalysis methods in which the catalyst and the reactants are in different phases - that are based on the use of solid catalysts, consisting of particles having dimensions comprised between colloidal (1 nm - 1 mm) and greater than 1 mm. The surface of the particles of the catalyst comprises active sites in which reactions breaking chemical bonds can occur, in particular bonds involving hydrogen, with resulting formation of intermediate compounds and new chemical species. As the reactions are performed on the surface of the catalyst particles, with respect to the homogeneous catalysis methods (in which the reactants are in the same phase as the catalyst) the reaction kinetics of the heterogeneous catalysis is less influenced by external factors (salinity of the medium; pH) and requires less energy consumption.

It should be noted that the molecules of the pollutants are fixed to the surface of the particles of the solid catalyst owing to the phenomenon of adsorption, which phenomenon however occurs in a limited way in known solid catalysts.

In fact, the aforesaid adsorption only occurs for the time that is strictly necessary for the catalysis reaction to take place and, upon completion of the reaction, the new chemical species that has formed - which can be both a reactive chemical species, and an oxidation product of the polluting agents - is released from the active site of the catalyst, which thus becomes available for a new reaction.

The prior art does not disclose examples of solid catalysts, which are usable for depurating industrial wastewater through oxidation processes, which solid catalysts are able to also act effectively as adsorbants of polluting agents, in the absence of oxidizing agents.

### Objects of the invention

An object of the invention is to improve known solid catalysts, in particular the solid catalysts that are usable for depurating industrial wastewater.

Another object is to provide a solid catalyst that is able to use adsorption effectively as an additional action mechanism for removing pollutants, in particular in the depuration of industrial wastewater.

A further object is to improve known methods for depurating industrial wastewater.

Yet another object is to provide a method for depurating industrial wastewater that enables the phenomenon of adsorption to be used effectively as an action mechanism in addition to the heterogeneous catalysis.

### Short description of the invention

In a first aspect of the invention, a solid catalyst is provided, as defined in claim 1.

In a second aspect of the invention, a method is provided for depurating industrial wastewater, as defined in claim 9.

Owing to these aspects of the invention, a solid catalyst and a method are provided for depurating industrial wastewater, which enable the aforesaid objects to be reached.

The Applicant has experimentally verified a new and surprisingly unexpected technical effect, namely the great capability for adsorbing polluting agents displayed by the solid catalyst according to the invention. In the absence of oxidizing agents, the active sites of the catalyst act as adsorption sites and bind the molecules of pollutant chemically, releasing the molecules only in a subsequent step of regeneration of the catalyst. The aforesaid adsorption capability can be expressed as a percentage of total organic carbon (TOC) removal from a treated matrix, for example industrial wastewater, and reaches 45%.

Therefore, in the presence of an oxidizing agent the catalyst according to the invention catalyzes the oxidation of chemical compounds (polluting agents) contained in industrial wastewater to be treated, whilst, in the absence of the oxidizing agent, the catalyst according to the invention performs the sole function of adsorbent towards the aforesaid chemical compounds.

The catalyst according to the invention can thus perform an effective action of removal of the pollutants on the basis of a dual action mechanism: catalytic acceleration of the oxidation processes, with consequent chemical degradation of the pollutants, and high capability to adsorb the pollutants, with a consequent further removal of the latter from the treated wastewater.

It should be lastly noted that the solid catalyst according to the invention can be produced by using waste materials of exhausted electric batteries, which enables the aforesaid materials to be recovered, avoiding the disposal thereof in landfill and the consequent environmental impact.

### Short description of the drawings

The invention can be better understood and implemented with reference to the attached drawings that illustrate an embodiment thereof by way of non-limiting example, in which:

Figure 1 is a bar graph showing a comparison between the catalytic oxidation of an organic compound (p-benzoquinone) in the presence of the solid catalyst according to the invention, a solid catalyst free of iron and ferrous chloride.

Figure 2 is a graph showing a comparison between an adsorption test and catalytic oxidation tests performed on an industrial liquid waste, by using the solid catalyst according to the invention.

Figure 3 is a graph showing a comparison between an adsorption test and catalytic oxidation tests performed on an industrial liquid waste that is different from the one of the tests of Figure 2, by using the solid catalyst according to the invention.

### Detailed description of the invention

In the present description and in the enclosed claims:
- The wordings "catalyst according to the invention" and "solid-phase catalyst according to the invention" are considered to be synonyms and can be used interchangeably;
- the wordings "solid catalyst" and "solid-phase catalyst" are considered to be synonyms and can be used interchangeably;
- the wordings "polluting agent/s" and "pollutant/s" are considered to be synonyms and can be used interchangeably;
- The abbreviation "TOC" and the wording "total organic carbon" are considered to be synonyms and can be used interchangeably;
- The indicated percentages (%) are defined as weight percentages compared with the total of the composition;
- The adsorption capability of the solid catalyst according to the invention is expressed as a percentage (%) of total organic carbon (TOC) removed from a treated matrix, in particular industrial wastewater.

In one embodiment, the solid catalyst according to the invention comprises a mixture of iron, oxygen, manganese, carbon, nickel, zinc and potassium. The oxygen contained in the mixture derives from metal oxides that are contained in metal scraps that are used as raw material. In particular, the aforesaid metal oxides can be obtained from waste materials of exhausted electric batteries.

In one embodiment, the solid catalyst according to the invention consists of, namely only comprises, a mixture of iron, oxygen, manganese, carbon, nickel, zinc and potassium.

In one embodiment, the solid catalyst according to the invention has the qualitative/quantitative formulation shown in Table 1 below:

**Table 1**

| **Component** | **% range by weight** |
|---|---|
| Iron | 50.0 - 67.0 |
| Oxygen | 11.0 - 33.5 |
| Manganese | 0.1 - 26.0 |
| Carbon | 0.1 - 16.0 |
| Nickel | 0.5 - 13.6 |
| Zinc | 10.0 - 13.0 |
| Potassium | 3.3 - 5.8 |

In one embodiment, the solid catalyst according to the invention comprises a plurality of particles in the form of flakes, which are obtained from the processing of metal scraps, have a rough surface and are black in colour. The aforesaid metal flakes mainly consist of a multicomponent mineral mixture. The metal elements are present in the elementary form thereof and, on the surface of the flakes, they are present in traces, in the form of salts and oxides.

In one embodiment, the flakes have average dimensions of 9 mm and a thickness of less than 1 mm.

In one embodiment, the solid catalyst according to the invention consists of the aforesaid plurality of particles in the form of flakes, having average dimensions of 9 mm and a thickness of less than 1 mm. Therefore, in this embodiment the solid catalyst according to the invention only comprises the aforesaid plurality of particles in the form of flakes.

In one embodiment, the flakes having average dimensions of 9 mm and a thickness of less than 1 mm are subjected to cold metal working (according to procedures that are known to the person skilled in the art), by which smaller particles are obtained from the metal flakes in the form of pellets, spheres and/or flakes having average dimensions of 1-2 mm.

In one embodiment, the solid catalyst according to the invention comprises a plurality of the aforesaid particles in the form of pellets, spheres and/or flakes.

In one embodiment, the solid catalyst according to the invention consists of the aforesaid plurality of particles in the form of pellets, spheres and/or flakes. Therefore, in this embodiment the solid catalyst according to the invention only comprises the aforesaid plurality of particles in the form of pellets, spheres and/or flakes.

In one embodiment, the solid catalyst according to the invention can be produced by using waste materials deriving from the trituration and grinding of exhausted electric batteries. These waste materials are subjected to an alkaline (NaOH 30%) and acid (HCl 30%) chemical washing and are subsequently subjected to a heat treatment (800° - 1000°C) that determines activation of the catalytic properties of the aforesaid materials. The so treated waste materials are then processed mechanically to obtain the flakes forming the solid catalyst according to the invention. This embodiment thus enables the aforesaid waste materials to be recovered, avoiding the disposal thereof in landfill and the consequent environmental impact, as well as reducing the costs required to produce the solid catalyst.

Whatever the form (flakes, pellets, spheres) and/or the average dimensions (from 1-2 mm to 9 mm) of the particles forming the solid catalyst according to the invention, the latter can be suitably used for depurating industrial wastewater.

The depuration of industrial wastewater having a high polluting load is effectively obtainable through the use of the solid catalyst according to the invention owing to the dual action mechanism of the latter, namely increase of the speed of the oxidation processes in the presence of oxidizing agents and high removal of the pollutants by adsorption in the absence of oxidizing agents.

The solid catalyst according to the invention can be used in advanced oxidation processes of known type, and therefore not disclosed here in detail, such as for example: wet catalytic peroxide oxidation (using hydrogen peroxide as oxidizing agent), Fenton-like thermochemical oxidation or heterogeneous Fenton (using hydrogen peroxide as an oxidizing agent) and ozonisation (using ozone as oxidizing agent).

In use, the solid catalyst according to the invention can be mixed with the industrial wastewater to be treated in concentrations varying from 1 to 15 g per litre of wastewater. The use of concentrations greater than 15 g per litre can be considered by the person skilled in the art on the basis of the features of the wastewater to be treated. Alternatively, the solid catalyst according to the invention can be immobilized on a solid substrate, for example consisting of a magnetic material of known type, and the wastewater to be treated is brought into contact with the solid substrate. Even when used as an adsorbent, i.e. without adding oxidizing agents, the catalyst according to the invention can be mixed with the industrial wastewater to be treated in concentrations varying from 1 to 15 g per litre (possibly also beyond 15 g per litre) of wastewater.

The amount of oxidizing agent - for example hydrogen peroxide or other known suitable oxidizing agent - to be used can be easily selected by the person skilled in the art on the basis of the initial COD value of the wastewater to be treated, considering that the aforesaid amount has to be proportional to the aforesaid COD value.

When the catalyst according to the invention is used in the presence of oxidizing agents, the duration of the treatment varies according to the amount of oxidizing agent and, for example, can be comprised between 20 minutes and 6 hours. When the catalyst according to the invention is used as an adsorbent, namely in the absence of oxidizing agents, the duration of the treatment can be comprised between 10 minutes and 2 hours.

The method according to the invention, usable for depurating industrial wastewater, comprises the following steps:
- adding the solid catalyst according to the invention to the industrial wastewater to be treated, so as to bring the catalyst into contact with the wastewater;
- optionally adding an oxidizing agent;
- in the presence of the oxidizing agent, removing the polluting agents that are contained in the wastewater through oxidation processes that are catalyzed by the solid catalyst, or, in the absence of the oxidizing agent, removing the polluting agents contained in the wastewater by the adsorption thereof to the solid catalyst.

In one embodiment, the method according to the invention comprises adding the solid catalyst in a concentration varying from 1 to 15 g per litre of wastewater.

In one embodiment, the method according to the invention comprises letting the catalyst act in the presence of oxidizing agents (advanced oxidation process with heterogeneous catalysis) for a time varying from 20 minutes to 6 hours. In another embodiment, the method according to the invention comprises letting the catalyst act in the absence of oxidizing agents (adsorption) for a time varying from 10 minutes to 2 hours.

Some experimental tests performed by the Applicant are disclosed below, by way of non-limiting example of the invention: verification of the catalytic efficacy of the catalyst according to the invention in oxidation processes (Example 1); comparison between catalytic efficacy and adsorption capability of the catalyst according to the invention (Example 2); verification of the adsorption capability of the catalyst according to the invention in synthetic wastewater (Example 3).

### Example 1 - Verification of the catalytic efficacy of the catalyst according to the invention in oxidation processes

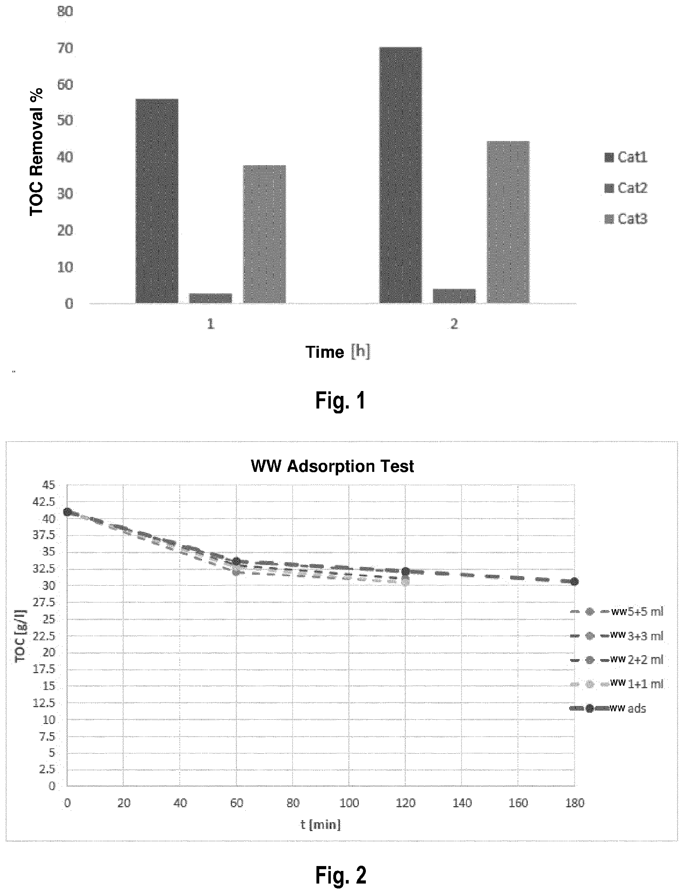

The capability to degrade by oxidation a sample consisting of an aqueous solution of p-benzoquinone (CAS 106-51-4), which is an example of not easily biodegradable organic compound, was compared in three different catalysts. The following catalysts were used: solid catalyst according to the invention (called "Cat1" in the present Example and in Figure 1), used in the presence of hydrogen peroxide (H₂O₂) to form a heterogeneous Fenton system; solid catalyst free of iron (called "Cat2" in the present Example and in Figure 1), used in the presence of hydrogen peroxide (H₂O₂) to form a heterogeneous Fenton system; a catalyst based only on iron (called "Cat3" in the present Example and in Figure 1), namely ferrous chloride (FeCl₂), used in the presence of hydrogen peroxide to form a homogeneous Fenton system.

Two tests were run for each catalyst, namely two analytical determinations of the TOC, at two different oxidation reaction times, namely at 1 h and 2 h. The sample volume (aqueous solution of p-benzoquinone) was 250 ml. The sample had a TOC of 1835 g/l and a COD of 4900 mg/l. The following amounts of the three catalysts were used: 0.2 g for Cat1 and Cat2; 0.15 g for Cat3. The amount of Cat3 (FeCl₂) used was determined starting from the average amount of grams of iron that are present in 100 grams of Cat1 - namely 33.5 g (analytically determined datum) - and relating this amount to the amount of Cat1 used (0.2 g), also taking account of the percentage of iron contained in FeCl₂ (44.06%).

The sample, namely 250 ml of aqueous solution of p-benzoquinone, was placed in a suitable container (beaker) together with the catalyst Cat1, Cat2 or Cat3 and the pH was adjusted to 1.5 by adding 0.6 M hydrochloric acid (HCl). The sample was the sample underwent to stirring for 2 hours by a magnetic stirrer of known type.

At an initial time (t = 0) the first dose of oxidizing agent (10 ml of H₂O₂) was added. After 1 hour had elapsed from the start of the reaction, an aliquot of the sample was taken, which aliquot was centrifuged at 10,000 rpm for 10 minutes. In this manner, a liquid fraction was separated, which underwent to analysis for determining the TOC using an analyzer of known type (Shimadzu TOC-L CSH/CSN).

After the first hour had elapsed, a second dose of oxidizing agent (10 ml of H₂O₂) was added and, after 2 hours had elapsed from the start of the test, an aliquot of the sample was again taken, which aliquot was centrifuged at 10,000 rpm for 10 minutes. The so separated liquid fraction underwent to analysis for determining the TOC using the aforesaid analyzer.

The results (oxidative degradation of the p-benzoquinone) of the tests are summarized in the graph of Figure 1, in which the results are expressed as a TOC removal percentage. Figure 1 clearly shows that the catalyst according to the invention (Cat1) is not only provided with a suitable catalytic capability, but also that this capability is greater than both that of a solid catalyst free of iron (Cat2), and that of iron (Cat3) used as a catalyst in a homogeneous Fenton system.

### Example 2 - Comparison between catalytic efficacy and adsorption capability of the catalyst according to the invention

The substrates disclosed in the following Table 2 were subjected to oxidation and adsorption tests:

**Table 2**

| **Type of substrate** | **TOC** | **pH** |
|---|---|---|
| Washing water (WW) | 41 ± 2.05 g/l | 5.6 |
| Oily emulsion (OE) | 29 ± 1.45 g/l | 5.3 |

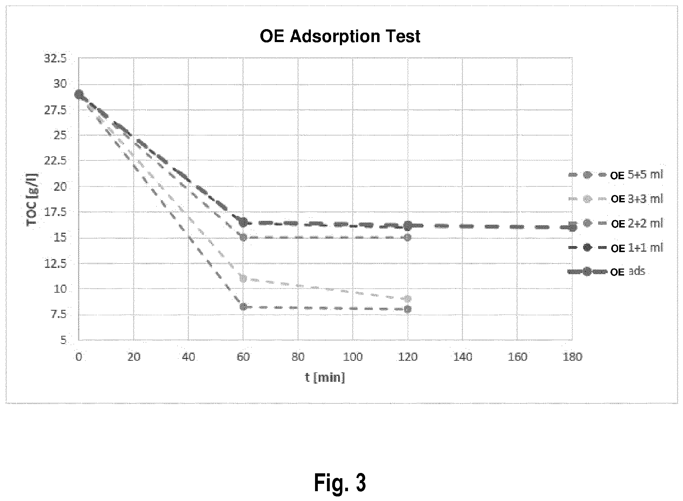

The results of the oxidation and adsorption tests performed on the WW samples and on the OE samples are summarized respectively in Figures 2 and 3.

The washing water samples, hereinafter named as WW, and oily emulsion samples, hereinafter named as OE, were used both as is and diluted. The oxidation and adsorption tests were performed using an apparatus of known type (stirred batch reactor, provided with a mechanical multi-arm stirrer) in which 200 ml of sample were placed and underwent to stirring for a time comprised between 2 h (oxidation tests) and 3 h (adsorption tests).

For the oxidation tests, the catalyst according to the invention was added to the sample (200 ml) in an amount of 30 g, with a resulting catalyst concentration of 150 g/l. The sample underwent to stirring for a time of 2 h. The initial pH was 1.5. The pH was measured after the first hour of treatment and adjusted to 1.5 by adding 2.5 M hydrochloric acid (HCl). Hydrogen peroxide was used as an oxidizing agent in an amount varying from 2 to 10 ml, namely using total doses of 2 ml, 4 ml, 6 ml and 10 ml. The oxidizing agent was added a first time (first dose of 1, 2, 3, 5 ml) at the start of the test (t = 0) and then after 1 h (second dose of 1, 2, 3, 5 ml). After each hour of treatment the TOC (expressed in grams/litre) was determined using the procedure disclosed in Example 1.

The results of the oxidation tests show that, whilst in the OE samples larger dosages of hydrogen peroxide caused a greater removal of TOC, namely higher reductions of the polluting load (Figure 3), the removal of the TOC obtained in the WW samples resulted to be independent from the amount of added oxidizing agent (Figure 2). The obtained results also point out that the largest amount of TOC is removed in the first hour of oxidation reaction.

In view of the substantial independence of the removal of TOC from the dosage of oxidizing agent found in the WW samples, adsorption tests were performed to verify whether the removal of TOC observed in the oxidation tests was, at least partly, due to phenomena of adsorption of the pollutants by the catalyst according to the invention. The adsorption tests were performed using the aforesaid apparatus of known type, in which 200 ml of sample were placed. The catalyst according to the invention was added to the sample (200 ml) in amounts of 30 g, with a resulting catalyst concentration of 150 g/l.

The sample underwent to stirring for a time of 3 h. The initial pH was 1.5. The pH was measured after the first hour and after the second hour of treatment and adjusted to 1.5 by adding 2.5 M hydrochloric acid (HCl). Oxidizing agent was not added. After each hour of treatment the TOC (expressed in grams/litre) was determined using the procedure disclosed in Example 1.

By comparing the results of the WW adsorption test with the results of the WW oxidation tests, it is noted that almost all the removal of TOC from the WW samples is obtained owing to adsorption on the catalyst according to the invention. This would explain the inefficacy of the increase of dosages of oxidizing agent (hydrogen peroxide) in removing TOC. The maximum TOC removal percentage obtained in the oxidation tests with a total peroxide dosage of 10 ml is in fact the same as that obtained in the adsorption test, namely about 25%.

By comparing the results of the OE adsorption test with the results of the OE oxidation tests, a greater trend to oxidation of the pollutants that are present in the OE samples is observed. By increasing the dosage of oxidizing agent (hydrogen peroxide), TOC removal percentages are obtained in the oxidation tests that are significantly higher than the removal percentage obtained in the adsorption test. In fact, whilst in the adsorption test a TOC removal percentage that is equal to 45% was obtained, the best result obtained in the oxidation tests (with a hydrogen peroxide dosage of 10 ml and after 2 hours of treatment) corresponds to a TOC removal percentage of about 72%.

### Example 3 - Verification in synthetic wastewater of the adsorption capability of the catalyst according to the invention

A synthetic wastewater (methylene blue solution) underwent to adsorption tests, in which the efficacy in the removal of the organic substances was evaluated by determining the variation of COD in samples treated with the catalyst according to the invention.

A stock solution of methylene blue was prepared having a concentration of 1000 ppm, by dissolving 1g of methylene blue in 1 litre of double-distilled water. The COD (mg/l) of the stock solution was measured (through a known method), both in a sample as is and in a sample filtered on paper.

In the sample as is and in the filtered sample the absorbance was then measured at the maximum wavelength for methylene blue (λₘₐₓ = 664 nm), by using a spectrophotometer of known type (HACH), and the absorbance values were correlated with the COD values. 100 ml aliquots of stock solution of methylene blue were pipetted into 250 ml beakers and set quantities (from 1 g to 40 g) were added to the latter of the catalyst according to the invention.

The pH of the samples was neutral and was not corrected by adding acid. A beaker containing the stock solution and catalyst-free was used as a control. After maintaining beaker under stirring for 2 h the treatment was interrupted, all the samples were filtered, including the control, and the corresponding absorbances were detected. From the latter the corresponding COD values were obtained.

In the following Table 3 the results are shown of the test disclosed above (results obtained for the sample containing 40 g of catalyst), compared with the data on the adsorption tests of Example 2:

**Table 3**

| **Sample** | **Initial TOC (g/l)** | **TOC after 1 h of treatment (g/l)** | **TOC after 2 h of treatment (g/l)** | **TOC removal % after 1 h of treatment** | **TOC removal % after 2 h of treatment** | **Amount of catalyst (g)** |
|---|---|---|---|---|---|---|
| Washing water (WW) | 41 | 33.7 | 32.5 | 18 | 21 | 30 |
| Oily emulsion (OE) | 29 | 16.75 | 16.75 | 42 | 42 | 30 |

| | **Initial COD (mg/l)** | | **COD after 2 h of treatment (mg/l)** | | **COD removal % after 2 h of treatment** | |
|---|---|---|---|---|---|---|
| synthetic wastewater (methylene blue solution) | 305 | | 167 | | 45 | 40 |

It is noted that the samples of Example 3 had pH 7 (neutral) and although they did not undergo correction of pH (acidification) as in the case of the samples of Examples 1 and 2, they responded positively to the treatment by adsorption. The catalyst according to the invention, when used in the absence of oxidizing agents (adsorption), thus offers the possibility of avoiding the phase of acidification of the wastewater to be treated, with a consequent saving in the procedure times and costs.

From what has been disclosed and exemplified previously, it can be stated that the catalyst according to the invention enables the previously indicated objects to be reached. In particular, it should be noted that the possibility of using the catalyst according to the invention both as a catalyst and as an adsorbent gives the undoubted advantage of being able to use different action mechanisms on the basis of the chemical composition and the consequent properties of the industrial wastewater to be treated. As shown in Example 2, different matrices (washing water; oily emulsion) can in fact exhibit different behaviours and offer different results on the basis of the performed treatment (oxidation; adsorption) and then on the basis of the different use of the catalyst according to the invention.

Therefore, before using the catalyst according to the invention for depurating industrial wastewater, a person skilled in the art will be able to preliminarily verify (for example by testing in a laboratory suitable volumes of the water to be treated) the greater or lesser refractoriness to the oxidation and adsorption exhibited by the polluting agents contained in the aforesaid water.

On the basis of the outcome of the verification, the person skilled in the art will be able to decide whether to treat industrial wastewater by using the catalyst according to the invention in combination with oxidizing agents (advanced oxidation process with heterogeneous catalysis) or without adding oxidizing agents (adsorption).

Possible variations on and/or additions to what has been disclosed are moreover possible.

For example, although the solid catalyst disclosed above has been prepared on a laboratory scale, the person skilled in the art is able to select and apply preparation procedures that are suitable for a production on an industrial scale.

## Claims

1. Solid catalyst usable for depurating industrial wastewater, comprising a mixture of iron, oxygen, manganese, carbon, nickel, zinc and potassium, said catalyst being able to catalyze oxidation processes of polluting agents in the presence of oxidizing agents and, alternatively, to act as an adsorbent of said polluting agents in the absence of said oxidizing agents.

2. Catalyst according to claim 1, consisting of said mixture of iron, oxygen, manganese, carbon, nickel, zinc and potassium.

3. Catalyst according to claim 1 or 2, having the following weight percentage formulation:
| | |
|---|---|
| Iron | 50.0 - 67.0% |
| Oxygen | 11.0 - 33.5% |
| Manganese | 0.1 - 26.0% |
| Carbon | 0.1 - 16.0% |
| Nickel | 0.5 - 13.6% |
| Zinc | 10.0 - 13.0% |
| Potassium | 3.3 - 5.8%. |

4. Catalyst according to any one of claims 1 to 3, comprising a plurality of particles having the shape of flakes, said flakes having average dimensions of 9 mm and a thickness of less than 1 mm.

5. Catalyst according to any one of claims 1 to 3, comprising a plurality of particles whose shape is selected from the group consisting of pellet, sphere or flake, said particles having average dimensions of 1-2 mm.

6. Catalyst according to claim 5 or 6, consisting of said plurality of particles.

7. Use of the catalyst according to any one of claims 1 to 6 for depurating wastewater.

8. Use according to claim 7, wherein said wastewater comprises industrial wastewater.

9. Method for depurating industrial wastewater using the solid catalyst according to any one of claims 1 to 6, said method comprising:
- adding said solid catalyst to industrial wastewaters to be treated, so as to bring said catalyst into contact with said wastewater;
- optionally adding at least one oxidizing agent;
- in the presence of said at least one oxidizing agent, removing polluting agents that are contained in said wastewater through oxidation processes that are catalyzed by said solid catalyst, or, in the absence of said at least one oxidizing agent, removing said polluting agents by the adsorption thereof to said solid catalyst.

10. Method according to claim 9, comprising adding said solid catalyst in concentrations varying from 1 to 15 g per litre of said wastewater and treating said wastewater with said solid catalyst for a time varying from 10 minutes to 6 hours.
